# FASCICULE DE BREVET EUROPEEN

(11) **EP 3 360 026 B1**
(45) Date de publication et mention de la délivrance du brevet: **07.05.2025**
(21) Numéro de dépôt: 16781337.7
(22) Date de dépôt: 06.10.2016
(51) Int. Cl.: G05G 5/03, G05G 1/08, G06F 3/01

(54) **INTERFACE HAPTIQUE HYBRIDE A RENDU HAPTIQUE AMELIORE**
HYBRIDE HAPTISCHE SCHNITTSTELLE MIT VERBESSERTER HAPTISCHER RÜCKKOPPLUNG
HYBRID HAPTIC INTERFACE WITH IMPROVED HAPTIC FEEDBACK

(30) Priorité: 06.10.2015 FR 1559502
(43) Date de publication de la demande: 15.08.2018
(73) Titulaire: Commissariat à l'Energie Atomique et aux Energies Alternatives, 75015 Paris (FR)
(72) Inventeur: ECK, Laurent, 28410 Saint Lubin de la Haye (FR); HAFEZ, Moustapha, 94110 Arcueil (FR); LEJAS, Romain, 91170 Viry Chatillon (FR)
(74) Mandataire: Brevalex
(86) Numéro de dépôt international: PCT/EP2016/073839
(87) Numéro de publication internationale: WO 2017/060330

(56) Documents cités:
- WO-A1-2015/033034
- FR-A1- 3 010 550
- US-A1- 2006 054 427
- US-A1- 2006 197 741
- US-A1- 2007 279 401

## Description

### DOMAINE TECHNIQUE ET ÉTAT DE LA TECHNIQUE ANTÉRIEURE

La présente invention se rapporte à une interface haptique hybride à rendu haptique amélioré.

Une interface haptique peut prendre la forme d'un bouton rotatif manipulé par un utilisateur, dans ce cas l'interface oppose un couple résistant à l'utilisateur en fonction de la position angulaire du bouton d'actionnement et du déplacement appliqué par l'utilisateur, permettant ainsi de définir des motifs haptiques variés qui seront ressentis par l'utilisateur lorsqu'il tourne le bouton.

Le couple résistant peut être transmis au bouton par l'intermédiaire d'un fluide magnéto-rhéologique dont la viscosité apparente est modifiée par l'application d'un champ magnétique afin de définir les motifs haptiques prédéfinis.

Une telle interface est dite passive car elle ne fait que s'opposer à un effort généré par l'utilisateur. Elle ne peut fournir plus d'énergie que celle fournie par l'utilisateur.

Par ailleurs, malgré la richesse des motifs haptiques pouvant être générés par une interface mettant uniquement en œuvre un fluide matériau magnéto-rhéologique, celle-ci ne peut pas générer parfaitement certains motifs haptiques spécifiques comme par exemple un effet ressort. Lorsque l'utilisateur force sur le « ressort », l'interface passive s'oppose correctement au déplacement. En revanche, lorsque l'utilisateur relâche le « ressort », il ne peut pas ressentir la force de rappel du ressort et l'interface ne vient pas se remettre dans la position de repos du « ressort ».

Il existe également des interfaces haptiques dites actives mettant en œuvre un moteur électrique capable de fournir un effort.

Cependant, un moteur de taille importante est requis pour fournir un effort résistant équivalent à celui d'une interface à fluide magnéto-rhéologique, comme par exemple lorsqu'il faut que l'interface reproduise la sensation haptique d'une butée ou d'un mur virtuel.

La taille du moteur peut être réduite, mais un étage de réduction est nécessaire pour obtenir un effort de freinage équivalent. Un tel étage de réduction est néfaste à la perception haptique ressentie, du fait de l'inertie et des efforts parasites générés et il dégrade la « transparence » de l'interface

De plus, la mise en œuvre d'un moteur électrique pose des difficultés pour traduire des variations rapides ou fines de l'effort. Il apparait des vibrations ou une instabilité de la commande.

Enfin, ce type d'interface peut être potentiellement dangereux pour un utilisateur si les efforts générés par le moteur sont importants.

Le document EP 1698 538 décrit une interface haptique hybride comportant un élément de sortie qui peut être par exemple manipulé directement par l'utilisateur, un moteur électrique, un double embrayage à fluide magnéto-rhéologique entre le moteur électrique et l'élément de sortie et un frein à fluide magnéto-rhéologique. Le moteur tourne à vitesse constante. Des engrenages permettent de générer deux directions de mouvement opposés. Chaque embrayage magnéto-rhéologique et le frein magnéto-rhéologique comportent leur propre système d'étanchéité, introduisant chacun des frottements parasites qui nuisent à la transparence de l'interface. En outre les embrayages, génèrent des frottements. De plus, le moteur et les engrenages tournent de manière permanente, ce qui génère un bruit de fonctionnement continu. L'encombrement du l'interface est également important.

Le document US 2006/054427 décrit un système haptique dans lequel, une première surface de freinage d'un premier élément est en contact avec une seconde surface de freinage d'un second élément. Au moins un actionneur est configuré pour exercer une force sur au moins un des premier et second éléments. Un dispositif de flexion est couplé à au moins l'un des éléments suivants : le premier élément, le second élément, un boîtier, un manipulateur et un arbre couplé au manipulateur. La flexion fournit un degré de flexibilité de rotation au manipulateur lorsque l'au moins un actionneur exerce la force.

Le document JP 2012 155674 décrit un appareil photographique ayant une unité d'entrainement a un arbre de rotation comme arbre de sortie, un élément d'actionnement relié à l'arbre de rotation, une unité de détection d'angle pour détecter un angle de rotation de l'arbre de rotation, et une unité de détection de couple pour détecter un couple de rotation de l'arbre de rotation ; une unité de commande effectue une commande pour donner une sensation de clic à l'actionnement de l'élément d'actionnement en entrainant l'unité d'entrainement sur la base des résultats de détection de l'unité de détection d'angle et de l'unité de détection de couple.

### EXPOSÉ DE L'INVENTION

C'est par conséquent un but de la présente invention d'offrir une interface haptique hybride offrant un rendu haptique amélioré, notamment une interface haptique capable de reproduire une plus grande diversité de motifs haptiques avec un ressenti de grande qualité et d'encombrement raisonnable.

Le but précédemment énoncé est atteint par une interface haptique hybride rotative comportant un organe d'interaction avec l'utilisateur et un organe d'interaction avec un fluide dont la viscosité varie en fonction d'un stimulus de contrôle, les deux organes étant solidaires au moins en rotation ou au moins en translation, des moyens pour générer un stimulus variable en modifiant la viscosité du fluide, un actionneur électromécanique rotatif couplé directement avec l'organe d'interaction avec l'utilisateur, de sorte que l'actionneur électromécanique puisse appliquer un effort en rotation à l'élément d'interaction avec l'utilisateur. L'interface comportant également des moyens pour détecter l'intention d'action de l'utilisateur avant que le mouvement appliqué à l'élément d'interaction avec l'utilisateur ne devienne perceptible pour l'utilisateur et pour le capteur de mesure de position, afin de déterminer le sens de déplacement que l'utilisateur a l'intention d'appliquer à l'élément d'interaction avec l'utilisateur.

L'actionneur électromécanique, par exemple un moteur électrique, est actif lorsque le motif haptique à reproduire le requiert ; lorsqu'il n'est pas actif, très peu d'effets parasites sont transmis à l'utilisateur. L'inertie de l'interface est donc peu augmentée par rapport à celle d'une interface haptique à fluide rhéologique seule.

En outre, puisque l'actionneur électromécanique est directement couplé à l'élément d'interaction avec l'utilisateur, l'interface présente une certaine compacité.

L'actionneur électromécanique peut avantageusement être dimensionné pour générer des mouvements à faible couple, ce qui permet un gain de place. En effet, la dissipation d'efforts importants obtenue grâce au frein magnéto-rhéologique et la génération d'efforts faibles obtenue par un petit moteur sont suffisants pour produire une sensation haptique de bonne qualité. Il n'est pas besoin de restituer un effort important vers l'utilisateur par une interface haptique lorsqu'elle doit simuler un élément ayant stocké de l'énergie.

De manière avantageuse, le couplage d'un frein passif et d'un actionneur électromécanique permet de reproduire de nouveaux motifs, tels que le motif "ressort". Par exemple, le frein s'oppose au déplacement lorsque l'utilisateur force sur le ressort et l'actionneur électromécanique simule l'action de rappel d'un ressort lorsque l'effort est relâché.

En outre, le frein à fluide à viscosité variable comporte des joints d'étanchéité qui confinent le fluide à viscosité variable dans une chambre et qui exercent sur les organes mobiles une pression qui induit un coupe résiduel, également désigné couple à vide. L'actionneur électromécanique peut être avantageusement commandé pour compenser ce couple.

De manière très avantageuse, le moteur peut être utilisé pour repositionner l'élément d'interaction avec l'utilisateur dans une position absolue après, par exemple, une coupure d'alimentation du dispositif.

En outre, les vibrations indésirables mentionnées ci-dessus dues à la mise en œuvre d'une commande de moteur électrique devant contrôler une très grande dynamique de couple n'apparaissent pas dans l'interface selon l'invention, car seul le frein à fluide magnéto-rhéologique est utilisé pour contrôler une très grande dynamique de couple.

La présente invention a alors pour objet une interface haptique comportant :
- un élément d'interaction avec un utilisateur apte à se déplacer dans un premier sens et dans un deuxième sens,
- un élément d'interaction avec un fluide dont la viscosité varie en fonction d'un stimulus extérieur, l'élément d'interaction avec le fluide étant solidaire au moins en translation ou au moins en rotation de l'élément d'interaction avec l'utilisateur,
- des moyens de mesure d'une position angulaire courante de l'élément d'interaction avec l'utilisateur,
- des moyens de détermination du sens de rotation de l'élément d'interaction avec l'utilisateur,
- un frein comportant un fluide dont la viscosité apparente varie en fonction d'un stimulus extérieur et un système de génération dudit stimulus sur commande dans ledit fluide, l'élément d'interaction avec le fluide étant disposé dans le fluide,
- des moyens électromécaniques rotatifs comportant un arbre solidaire en rotation de l'élément d'interaction avec l'utilisateur,
- une unité de commande apte à générer des ordres audit système de génération dudit stimulus de modifier la valeur du stimulus, et aux moyens électromécaniques,
- des moyens pour détecter le couple exercé par un utilisateur sur l'élément d'interaction avec l'utilisateur, dans le cas d'un élément d'interaction avec l'utilisateur mobile en rotation, afin de connaître le sens du couple et si le couple est supérieur à une valeur donnée pour un sens donné, l'unité de commande commandant le système de génération dudit stimulus sur la base des informations obtenues sur le couple au moins lorsqu'une vitesse nulle ou faible de l'élément d'interaction avec l'utilisateur est détectée.

Dans un exemple avantageux, les moyens électromécaniques comportent un moteur électrique.

De préférence, les moyens de détermination du sens de rotation de l'élément d'interaction avec l'utilisateur sont formés par les moyens pour détecter le couple exercé par un utilisateur sur l'élément d'interaction avec l'utilisateur ou utilisent des variations temporelles des moyens de mesure d'une position angulaire courante de l'élément d'interaction avec l'utilisateur,

Les moyens pour détecter le couple appliqué par l'utilisateur sur l'élément d'interaction avec l'utilisateur peuvent comporter deux capteurs de la déformation provoquée par le couple à l'un des éléments de l'interface haptique, lesdits capteurs de déformation étant disposés de sorte qu'un capteur de déformation détecte la déformation lorsque le couple est appliqué dans le premier sens et l'autre capteur de déformation détecte une déformation lorsque le couple est appliqué dans le deuxième sens.

Dans un autre exemple de réalisation, les moyens pour détecter le couple appliqué par l'utilisateur sur l'élément d'interaction avec l'utilisateur comportent au moins un capteur de la déformation provoquée par le couple à l'un des éléments de l'interface haptique. De manière préférée, les moyens pour détecter le couple appliqué par l'utilisateur sur l'élément d'interaction avec l'utilisateur comportent deux capteurs de la déformation provoquée par le couple à l'un des éléments de l'interface haptique, lesdits capteurs de déformation étant disposés de sorte qu'un capteur de déformation détecte la déformation lorsque le couple est appliqué dans le premier sens et l'autre capteur de déformation détecte une déformation lorsque le couple est appliqué dans le deuxième sens.

De préférence, le corps d'épreuve est en un matériau tel que sa déformation n'est pas perceptible par l'utilisateur.

Le ou les capteurs d'effort peut ou peuvent être en contact ponctuel avec le corps d'épreuve.

L'interface haptique peut comporter un bâti sur lequel sont fixés des moyens pour détecter le couple ou la force, le corps d'épreuve étant d'une part solidaire du frein et d'autre part solidaire du bâti de sorte à être déformé lorsqu'un couple ou une force est appliquée à l'élément d'interaction avec l'utilisateur.

Le ou les capteurs d'effort ou le ou les capteurs de déformation sont avantageusement disposés par rapport au corps d'épreuve de sorte que la sensibilité de mesure des capteurs d'effort vis-à-vis du couple ou de la force soit maximisée.

Dans un exemple de réalisation, l'élément d'interaction avec l'utilisateur est mobile en rotation et est solidaire d'un arbre de rotation d'axe longitudinal duquel est solidaire en rotation l'élément d'interaction avec le fluide, le couple de rotation étant déterminé. Le frein peut alors comporter un boîtier cylindrique de section circulaire coaxial à l'axe de l'arbre de rotation, le corps d'épreuve étant cylindrique de section circulaire coaxial et disposé autour du boîtier de manière coaxiale et dans lequel le ou les capteurs d'effort ou le ou les capteurs de déformation sont disposés sur un cercle centré sur l'axe de rotation de l'arbre de rotation.

Dans un exemple de réalisation, l'unité de commande est configurée pour générer des ordres aux moyens électromécaniques de ramener l'élément d'interaction avec l'utilisateur dans au moins une position donnée.

L'unité de commande peut être configurée pour générer des ordres aux moyens électromécaniques et au système de génération dudit stimulus de sorte qu'ils agissent simultanément sur l'élément d'interaction avec l'utilisateur.

Selon une caractéristique additionnelle, l'unité de commande est configurée pour générer des ordres aux moyens électromécaniques afin qu'ils appliquent un couple à l'élément d'interaction avec l'utilisateur compensant des frottements s'appliquant à l'élément d'interaction avec l'utilisateur.

Selon une autre caractéristique additionnelle, l'unité de commande est configurée pour générer des ordres aux moyens électromécaniques et au système de génération dudit stimulus de sorte que, à partir d'au moins une position angulaire donnée de l'élément d'interaction avec l'utilisateur, le système de génération dudit stimulus agisse et/ou les moyens électromécaniques agissent sur l'élément d'interaction avec l'utilisateur, lorsque l'élément d'interaction avec l'utilisateur tourne dans un premier sens et dans un deuxième sens opposé au premier sens, pour s'opposer à la rotation de l'élément d'interaction avec l'utilisateur, et de sorte que les moyens électromécaniques assistent la rotation de l'élément d'interaction avec l'utilisateur au moins lorsque celui-ci est pivoté dans le premier sens ou le deuxième sens vers la position angulaire donnée.

L'unité de commande peut alors être configurée pour que, lorsque l'élément d'interaction avec l'utilisateur se trouve à la position angulaire donnée, elle génère des ordres aux moyens électromécaniques et/ou au système de génération dudit stimulus d'appliquer un effort non nul sur l'élément d'interaction avec l'utilisateur. En variante, l'unité de commande est configurée pour que, lorsque l'élément d'interaction avec l'utilisateur se trouve dans une zone angulaire de part et d'autre de la position angulaire donnée, elle génère des ordres aux moyens électromécaniques et/ou au système de génération dudit stimulus de n'appliquer aucun effort sur l'élément d'interaction avec l'utilisateur. Par exemple, l'unité de commande est configurée pour que, lorsque l'élément d'interaction avec l'utilisateur se trouve à des extrémités de la zone angulaire, elle génère des ordres aux moyens électromécaniques et/ou au système de génération dudit stimulus d'appliquer un effort sur l'élément d'interaction avec l'utilisateur.

Les moyens pour détecter le couple ou la force appliqué par l'utilisateur sur l'élément d'interaction avec l'utilisateur comportent par exemple au moins un capteur d'effort, préférentiellement monté en précontrainte.

En variante, les moyens pour détecter le couple peuvent comporter au moins un capteur de la déformation provoquée par le couple ou la force à l'un des éléments de l'interface haptique.

Dans un exemple avantageux, l'interface haptique comporte un corps d'épreuve qui est disposé de sorte à être déformé par le couple appliqué par l'utilisateur sur l'élément d'interaction avec l'utilisateur, les moyens pour détecter le couple ou la force étant en contact avec ledit corps d'épreuve.

Dans un exemple préféré, le fluide est un fluide magnéto-rhéologique et le stimulus est un champ magnétique.

La présente invention a également pour objet un procédé de commande d'une interface haptique selon l'invention, comportant les étapes
- Mesure de la position courante de l'élément d'interaction avec l'utilisateur,
- enregistrement de ladite position courante dans une mémoire non volatile,
- Mesure de la position courante de l'élément d'interaction avec l'utilisateur, par exemple suite à une interruption d'une alimentation électrique de l'unité de commande,
- comparaison de la position courante mesurée et la position courante enregistrée,
- Commande des moyens électromécaniques pour que la position courante mesurée corresponde à la position courante enregistrée.

La présente invention a également pour objet un procédé de commande d'une interface haptique selon l'invention, en vue de reproduire un motif haptique de type ressort, comportant les étapes :
- Mesure de la position courante de l'élément d'interaction avec l'utilisateur
- Détermination du sens de rotation de l'élément d'interaction avec l'utilisateur
- Commande des moyens électromécaniques pour appliquer un effort dans le sens de déplacement l'élément d'interaction avec l'utilisateur, ou
- Commande des moyens électromécaniques et/ou du système de génération dudit stimulus pour appliquer un effort s'opposant au déplacement de l'élément d'interaction avec l'utilisateur.

La présente invention a également pour objet un procédé de commande d'une interface haptique selon l'invention, comportant les étapes :
- Commande des moyens électromécaniques pour appliquer un effort dans le sens de déplacement de l'élément d'interaction avec l'utilisateur de telle sorte que les moyens électromécaniques appliquent un couple compensant un couple à vide s'exerçant sur l'élément d'interaction avec l'utilisateur

La présente invention a également pour objet un procédé de commande d'une interface haptique selon l'invention, comportant les étapes :
- détermination de la vitesse de l'élément d'interaction avec l'utilisateur à partir des informations fournies par les moyens de mesure de la position courante de l'élément d'interaction avec l'utilisateur,
- détermination du couple appliqué à l'élément d'interaction avec l'utilisateur,
- détermination de la position courante de l'élément d'interaction avec l'utilisateur,
- si la vitesse est supérieure à une vitesse donnée, le sens de rotation est celui donné par la vitesse et le système de génération d'un stimulus est commandé de sorte à appliquer le motif haptique enregistré pour la position courante déterminée et pour le sens de rotation déterminé,
- si la vitesse est inférieure à une vitesse donnée et si le couple ou la force est supérieur(e) à une valeur seuil positive ou inférieur(e) à une valeur seuil négative, le sens de déplacement de l'élément d'interaction avec l'utilisateur est déduit du couple ou de la force déterminé(e), et le système de génération d'un stimulus est commandé de sorte à appliquer un stimulus en fonction du motif haptique enregistré pour cette position courante et pour le sens de déplacement déduit.

Par exemple, lorsque le couple déterminé est inférieur à une valeur donnée, aucun stimulus n'est appliqué au fluide.

### BRÈVE DESCRIPTION DES DESSINS

La présente invention sera mieux comprise sur la base de la description qui va suivre et des dessins en annexe sur lesquels:
- la figure 1 est une vue en coupe longitudinale représentée schématiquement d'un exemple d'interface haptique selon l'invention,
- la figure 2 est une vue en coupe transversale le long du plan A-A de l'interface de la figure 1,
- la figure 3 est une vue en perspective d'un exemple de réalisation d'un corps d'épreuve mis en œuvre dans l'interface de la figure 1,
- la figure 4 est une vue en perspective d'un autre exemple de réalisation d'un corps d'épreuve pouvant être mis en œuvre dans l'interface de la figure 1,
- la figure 5 est une vue de côté d'un autre exemple d'interface haptique,
- les figures 6A à 6C sont différentes vues du corps d'épreuve mis en œuvre dans l'interface de la figure 5,
- les figures 7 à 11 sont des représentations graphiques de consignes en fonction de de la position angulaire en degré pour produire différents motifs haptiques,
- la figure 12 est une vue de face d'une roue à rochet et de son cliquet, le déplacement du cliquet étant reproductible par l'interface haptique selon l'invention.

### EXPOSÉ DÉTAILLÉ DE MODES DE RÉALISATION PARTICULIERS

La description qui suit décrit l'exemple d'une interface haptique rotative mettant en œuvre un fluide magnéto-rhéologique, i.e. dont la viscosité apparente varie en fonction du champ magnétique appliqué, mais la mise en œuvre d'un fluide électro-rhéologique, i.e. un fluide dont la viscosité apparente dépend du champ électrique appliqué, ne sort pas du cadre de la présente invention.

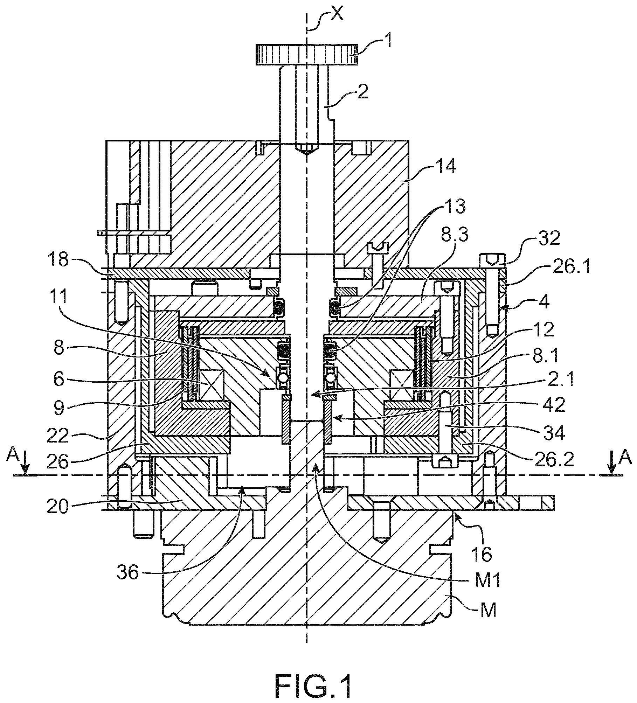

Sur la figure 1, on peut voir une vue en coupe longitudinale d'un exemple de réalisation d'une interface haptique rotative selon l'invention.

L'interface haptique comporte un élément 1 destiné à être manipulé par un utilisateur et qui sera désigné par la suite « bouton », ce bouton est solidaire en rotation d'un arbre 2 mobile en rotation autour de l'axe X, un dispositif de génération d'effort résistant 4 ou frein magnéto-rhéologique s'opposant à la rotation de l'arbre 2 et un deuxième dispositif de génération d'effort M formé par un actionneur électromécanique, par exemple un moteur et désigné par la suite « moteur ». L'arbre 2 sera désigné « arbre d'actionnement 2 » dans la suite de la description. L'actionneur électromécanique peut être par exemple du type machine électrique à courant continu, ou encore machine électrique synchrone, de type « brushless » par exemple, ce qui permet de se passer de balais et de réduire l'inertie du rotor.

Le moteur M comporte un arbre moteur M1 qui est aligné sur l'axe longitudinal. L'arbre M1 comporte une extrémité libre disposée en regard d'une extrémité libre de l'arbre d'actionnement 2. L'arbre moteur M1 et l'arbre d'actionnement 2 sont couplés mécaniquement de sorte à être solidaires l'un de l'autre au moins en rotation. Une pièce de couplage 42 des arbres M1 et 2 est montée autour des extrémités libres de arbres. La pièce de couplage peut par exemple être une bague montée sur l'extrémité de l'arbre moteur M1 et sur l'extrémité de l'arbre d'actionnement 2, chacune des extrémités étant munie d'un méplat coopérant avec la bague. En variante, les arbres peuvent être cannelés et la bague peut présenter une surface intérieure complémentaire.

En variante, un seul arbre peut former l'arbre 2 et l'arbre M1.

En variante encore, le moteur peut disposer d'un arbre débouchant à chaque extrémité, une extrémité de l'arbre du moteur étant solidarisée à l'extrémité débouchante de l'arbre 2. Le bouton 1 est solidaire de l'extrémité de l'arbre du moteur non solidarisée à l'arbre 2 du frein. Cette variante présente l'avantage de pouvoir mettre en œuvre un frein avec un axe qui ne traverse qu'une paroi de la chambre du frein, ce qui permet de réduire le nombre de joints du frein assurant l'étanchéité de la chambre, et donc de réduire les frottements parasites.

Le frein 4 comporte un fluide dont on peut modifier les caractéristiques au moyen d'un champ magnétique et un système de génération d'un champ magnétique 6 reçus dans un boîtier 8. Le fluide est, par exemple un liquide magnéto-rhéologique. L'ensemble comprenant le boîtier, le fluide et le système de génération d'un champ magnétique forme un frein magnéto-rhéologique.

Le boîtier 8 délimite une chambre étanche 9 contenant le fluide magnéto-rhéologique. Tout ou partie de cette chambre est soumise à un champ magnétique généré par le système 6. Le boîtier 8 comporte une paroi latérale 8.1, un fond inférieur 8.2 et un fond supérieur 8.3.

L'arbre 2 traverse le fond supérieur 8.3, la chambre 9 et le fond inférieur 8.2. L'extrémité 2.1 de l'arbre 2, opposée à celle portant le bouton 1, traverse le fond inférieur 8.2 du boîtier 8 et est guidé en rotation au moyen d'un roulement 11. Des joints 13, par exemple des joints toriques, assurent l'étanchéité entre l'arbre et la chambre. Dans l'exemple représenté le roulement est disposé à l'extérieur de la zone étanche délimitée par les joints 13.

Le boîtier 8 délimite une chambre étanche confinant le fluide magnéto-rhéologique.

Le frein 4 comporte également un élément 12 solidaire en rotation de l'arbre 2 et logé dans la chambre étanche 9. Cet élément est apte à interagir avec le fluide magnéto-rhéologique, la rotation de l'élément 12 étant plus au moins freinée par le fluide magnéto-rhéologique en fonction de sa viscosité apparente.

Dans l'exemple représenté, l'élément 12 comporte deux parois latérales concentriques 12.1, 12.2 de section transversale circulaire solidaire d'un fond 12.3, lui-même solidarisé en rotation avec l'arbre.

En variante, l'élément 12 peut ne comporter qu'une paroi latérale ou plus de deux parois latérales concentriques. En variante encore, l'élément 12 pourrait être formé par un disque. Par ailleurs, l'élément d'interaction pourrait comporter des lumières et/ou des portions en saillie ou en creux afin d'augmenter la résistance au déplacement.

Dans l'exemple représenté, le fond inférieur 8.2 du boîtier 8 a une forme telle que le volume intérieur de la chambre étanche 9 a une forme qui correspond à celle de l'élément d'interaction 12, ce qui permet de réduire la quantité de fluide nécessaire. Dans l'exemple représenté, un élément cylindrique 15 à section circulaire solidaire du boîtier est interposé entre les deux parois latérales 12.1, 12.2, celui-ci contribue à l'effet de cisaillement du fluide magnéto-rhéologique lors que les parois latérales 12.1 et 12.2 sont mises en rotation.

Les parois latérales 12.1, 12.2 de l'élément 12 peuvent être en matériau magnétique ou amagnétique.

Dans l'exemple représenté, le système de génération d'un champ magnétique variable 6 comporte une bobine fixée sur le boîtier et disposée à l'intérieur de l'élément d'interaction 12, et une alimentation en courant (non représentée) commandée par une unité de commande en fonction de la manipulation du bouton et de motifs préenregistrés.

L'interface comporte également un capteur de position 14 qui est, dans l'exemple représenté, situé à l'extérieur du boîtier et en partie solidaire de l'arbre 2. Le capteur de position 14 permet de mesurer la position courante du bouton, qui est dans l'exemple représenté par la position angulaire courante. Il peut s'agir par exemple d'un codeur optique incrémental.

L'interface comporte également des moyens de détection du sens de rotation de l'élément d'interaction avec l'utilisateur, ces moyens sont par exemple formés par le traitement des informations de position fourni par le capteur de position angulaire, qui permet de déterminer le sens d'actionnement en effectuant par exemple un calcul de différence entre une position angulaire mesurée à un instant T et une position mesurée à l'instant T+deltaT. Dans le cas où le capteur de position est un codeur fournissant des signaux numériques en quadrature, par exemple un codeur optique incrémental, le sens d'actionnement peut être déterminé directement par l'analyse de la phase relative des signaux en quadrature. Le sens d'actionnement du bouton est utilisé pour la commande du frein magnéto rhéologique ainsi que pour la commande du moteur. Comme nous le verrons par la suite l'interface comporte également un capteur du couple exercé sur l'élément d'interaction avec l'utilisateur, les mesures de couple peuvent être utilisées pour déterminer le sens de rotation.

L'interface haptique comporte également un bâti 16 dans lequel est disposé le boîtier 8. Le bâti 16 comporte un premier et un deuxième flasque d'extrémité 18, 20 et une paroi latérale 22 fixée aux deux flasques 18, 20, le premier flasque 18 est traversé par l'arbre rotatif et le deuxième flasque est traversé par l'arbre moteur. Le capteur de position 14 est fixé sur le premier flasque du bâti.

L'interface comporte également des moyens pour détecter l'intention d'action de l'utilisateur, ces moyens détectant le couple exercé par l'utilisateur sur le bouton avant qu'un déplacement du bouton perceptible par l'utilisateur et par le capteur de position lui soit appliqué.

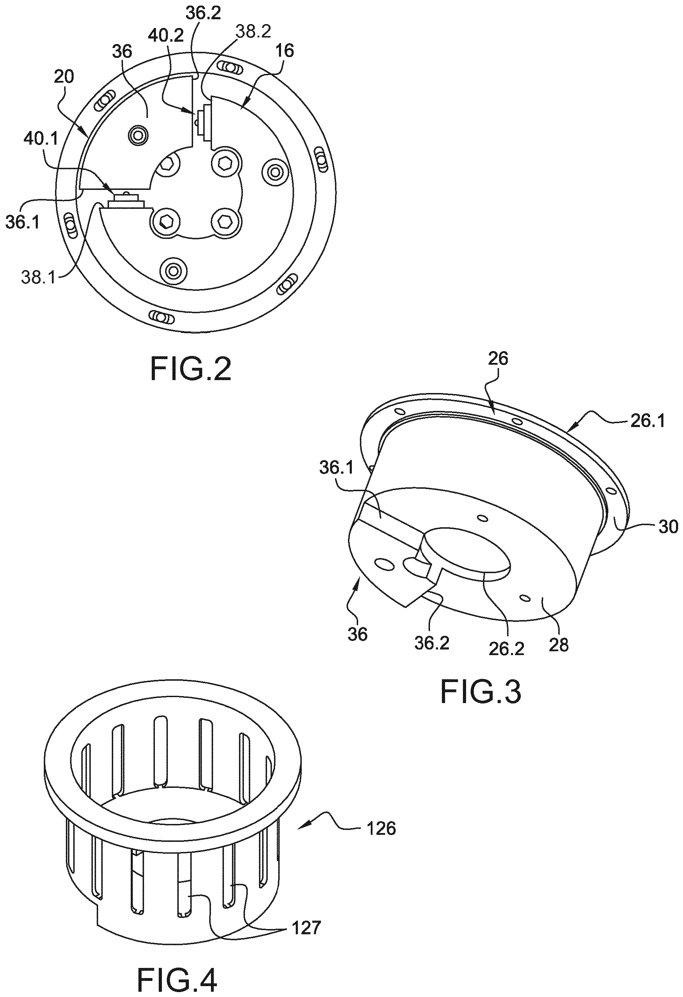

Dans l'exemple représenté, les moyens de détection de l'intention d'action de l'utilisateur comportent un corps d'épreuve 26, dont on va détecter la déformation provoquée par le couple appliqué par l'utilisateur, et des capteurs d'effort. Le corps d'épreuve est représenté seul sur la figure 3. Le corps d'épreuve 26 est fixé par une extrémité longitudinale 26.1 au bâti 16 et par l'autre extrémité longitudinale 26.2 au frein magnéto-rhéologique, i.e. au boîtier 8 dans l'exemple représenté. Les capteurs d'effort sont en contact avec le corps d'épreuve au niveau de son extrémité longitudinale 26.2 solidarisée au boîtier 8.

Dans l'exemple représenté sur les figures 1, 2 et 3, le corps d'épreuve 26 comporte un corps de forme cylindrique à section circulaire fermé par un fond 28 à l'extrémité longitudinale 26.2. Une collerette annulaire 30 s'étend radialement vers l'extérieur au niveau de l'autre extrémité longitudinale 26.1.

Le diamètre intérieur du corps d'épreuve correspond au diamètre extérieur du boîtier 8, augmenté d'un jeu de fonctionnement. Le fond du corps d'épreuve est disposé entre le boîtier et le deuxième flasque 20 du bâti 16.

Le corps d'épreuve est solidarisé au bâti au moyen d'au moins une vis 32 traversant le flasque 18 et la collerette 30. Dans l'exemple représenté, les vis 32 servent également à lier le flasque 18 à la paroi latérale 28.

Le fond 28 du corps d'épreuve est fixé au boîtier 8 par au moins une vis 34.

Le corps d'épreuve 26 comporte également un élément 36 en saillie de son extrémité longitudinale 26.2 opposée à celle en contact avec le boîtier. L'élément 36 est reçu dans une cavité 38 ménagée dans le flasque 20 du bâti.

Dans l'exemple représenté, l'élément en saillie 36 a la forme d'une portion angulaire centrée sur l'axe longitudinal. Comme on peut le voir sur la figure 2, la portion angulaire 36 est délimitée par deux faces 36.1, 36.2. La cavité 38 présente une forme correspondant à celle de la portion angulaire 36 et est délimitée par deux faces 38.1 38.2 chacune en regard d'une face 36.1, 36.2 de la portion angulaire 36. Un capteur d'effort 40.1 est monté sur la face 38.1 de la cavité en contact avec la face 36.1 de la portion angulaire et un capteur d'effort 40.2 est monté sur la face 38.2 de la cavité en contact avec la face 36.2 de la portion angulaire 36. Un contact mécanique de type ponctuel est assuré entre chaque capteur d'effort 40.1, 40.2 et le corps d'épreuve 26. Les capteurs d'effort 40.1, 40.2 sont avantageusement montés précontraints.

Ainsi lorsqu'un couple est appliqué au bouton, celui-ci provoque une déformation par torsion du corps d'épreuve 26 par l'intermédiaire du boitier 8 lui-même en interaction avec le fluide, lui-même en interaction avec l'élément d'interaction 12, lui-même lié à l'arbre 2 Cette déformation est détectée par l'un ou l'autre des capteurs d'effort 40.1, 40.2 suivant le sens de rotation du bouton.

Le corps d'épreuve est par exemple en matériau plastique, tel que l'ABS.

Le matériau du corps d'épreuve et sa géométrie peuvent être déterminés en fonction du couple minimal et du couple maximal appliqués, de la sensibilité des capteurs d'effort et du seuil de détection souhaité. En outre, la déformation du corps d'épreuve est telle qu'elle n'est pas perceptible par l'utilisateur. Par exemple, on peut considérer qu'une déformation du corps d'épreuve de quelques microns n'est pas perceptible par l'utilisateur.

Alternativement, on pourrait mesurer les efforts directement sur le boîtier 8 ou sur l'arbre rotatif, pour cela un capteur de couple serait mis en œuvre. Cependant un capteur de couple a un coût élevé et un encombrement important par rapport aux capteurs de force. Par ailleurs, un capteur de couple fournit une valeur du couple précise et calibrée alors que cette information n'est pas utile dans le cadre de l'invention.

Le capteur d'effort est par exemple réalisé à l'aide d'éléments piézorésistifs assemblés sous la forme d'un pont de Wheatstone, ils permettent une sensibilité de l'ordre de quelques dizaines de mV par Newton avec une raideur suffisamment élevée pour limiter le déplacement à quelques dizaines de microns à pleine charge. En variante, le ou les capteurs d'effort pourraient être remplacés par un ou des capteurs de déformation formés, par exemple, par des jauges de contrainte directement appliquées sur le corps d'épreuve pour détecter sa déformation.

Le moteur M étant lié mécaniquement au deuxième flasque 16 du bâti, il ne perturbe pas la mesure du couple sur l'arbre d'actionnement.

Sur la figure 4, on peut voir un autre exemple d'un corps d'épreuve 126 dont la forme générale est identique à celle du corps d'épreuve 26, mais comporte en plus des lumières longitudinales 127 dans la paroi latérale du corps d'épreuve 126. De préférence, les lumières 127 sont réparties angulairement de manière régulière. Le corps d'épreuve présente dans cette réalisation une plus grande aptitude à la déformation. Il est par exemple réalisé en alliage d'aluminium.

Des lumières inclinées par rapport à l'axe longitudinal et/ou ayant une forme autre que rectiligne par exemple une forme courbée ne sortent pas du cadre de la présente invention. Par ailleurs les lumières n'ont pas nécessairement toutes les mêmes dimensions.

De manière avantageuse, on peut prévoir des moyens pour amplifier la déformation du corps d'épreuve sous une contrainte de torsion axiale tout en réduisant la déformation du corps d'épreuve pour toute autre contrainte non pertinente dans le cadre de l'invention, comme par exemple une contrainte radiale qui serait appliquée au bouton de manière parasite par l'utilisateur. La sensibilité de la détection est ainsi améliorée et les perturbations ou fausses détections peuvent être éliminées.

L'exemple de corps d'épreuve des figures 1 à 4 permet d'augmenter la sensibilité du dispositif de mesure en disposant les capteurs sur un diamètre le plus grand possible.

Dans l'exemple représenté et de manière avantageuse, les parois 36.1 et 36.2 de l'élément en saillie sont disposées à 90° l'une par rapport à l'autre. Ce positionnement associé à un contact ponctuel au niveau des capteurs d'effort 40.1 et 40.2 permet de décomposer la contrainte de déformation du corps d'épreuve et de privilégier la sensibilité aux efforts selon deux composantes orthogonales situées dans le plan du bâti 16. Ainsi par exemple, la sensibilité est fortement réduite pour des efforts parasites exercés perpendiculairement au plan du bâti 16. De plus, un traitement calculatoire ou algorithmique sur les composantes des forces orthogonales mesurées par les capteurs 40.1 et 40.2, comme par exemple un calcul basé sur la différence de mesure entre les deux capteurs pondéré par la composante commune de mesure des deux capteurs dans le cas d'un assemblage préférentiel des capteurs avec une précontrainte de charge, permet de réduire dans une certaine mesure la sensibilité aux efforts parasites exercés parallèlement au plan du bâti 16.

L'interface haptique comporte également une unité de commande UC à laquelle sont connectés le capteur de position courante, les moyens de détermination du sens de rotation du bouton, le capteur de couple, les moyens de génération du champ magnétique et le moteur électrique. L'unité de commande traite les signaux transmis par les capteurs et génère des ordres aux moyens de génération du champ magnétique et au moteur électrique.

Un exemple de fonctionnement du dispositif va maintenant être décrit.

L'utilisateur tourne le bouton autour de son axe dans un premier sens de rotation et l'amène dans une position angulaire définie comme une butée. Un champ magnétique est appliqué au fluide magnéto-rhéologique de sorte que sa variation de viscosité apparente génère un couple au niveau de l'élément d'interaction avec le fluide simulant une butée au niveau du bouton dans le premier sens de rotation.

Si l'utilisateur maintient son effort sur le bouton dans le premier sens de rotation, le corps d'épreuve 26 subit un couple de torsion via le boîtier, lui-même en interaction avec le fluide, lui-même en interaction avec l'élément d'interaction 12, lui-même lié à l'arbre 2.

Cette déformation est mesurée par le capteur de force disposé en aval dans le premier sens de rotation. Le fait de savoir lequel des capteurs de force est sollicité permet de connaître le sens dans lequel l'utilisateur a l'intention de tourner le bouton. De manière préférentielle, on peut combiner les mesures issues des deux capteurs de force assemblés avec une précontrainte de charge pour déterminer le sens dans lequel l'utilisateur a l'intention de tourner le bouton. La détection d'un couple minimal permet de confirmer que l'utilisateur a effectivement l'intention de faire pivoter le bouton. Il en est déduit que l'utilisateur a l'intention de maintenir le bouton en butée. Le champ magnétique est maintenu de sorte à opposer un effort au mouvement de l'élément d'interaction 12 via le fluide magnéto-rhéologique visqueux.

Si l'utilisateur a l'intention de faire pivoter le bouton dans un deuxième sens opposé au premier sens, c'est le capteur d'effort disposé en amont en considérant le premier sens de rotation, qui va être sollicité. De manière préférentielle, on peut combiner les mesures issues des deux capteurs de force assemblés avec une précontrainte de charge pour déterminer le nouveau sens dans lequel l'utilisateur a l'intention de tourner le bouton. On en déduit l'intention de l'utilisateur, cette intention est confirmée par la détection d'un couple minimal. Dans ce cas, le champ magnétique est annulé, la viscosité apparente du fluide diminue fortement, l'élément d'interaction peut donc tourner dans le deuxième sens sans ressentir d'effet de collage. On peut ainsi reproduire grâce à l'invention le fonctionnement d'une roue libre.

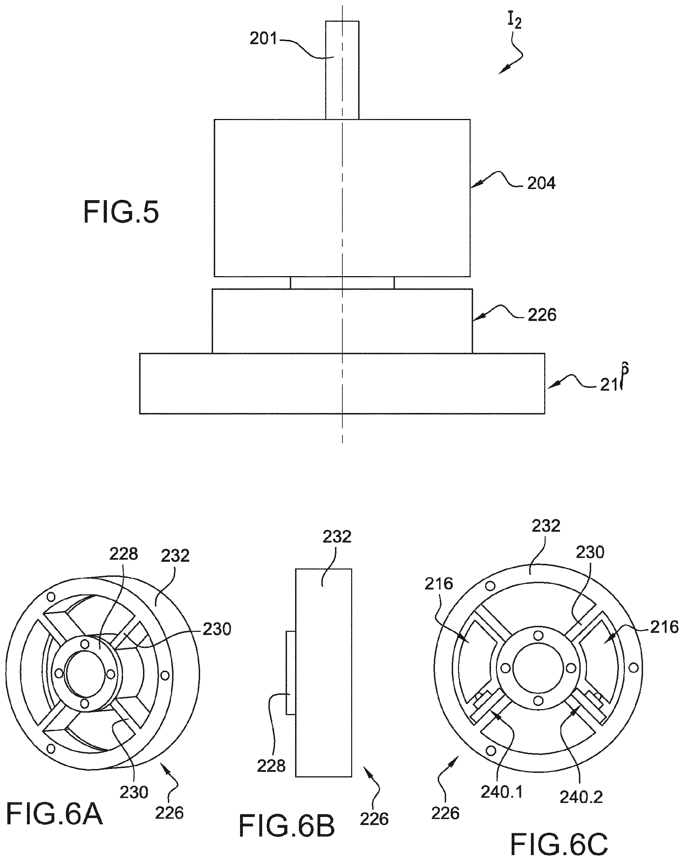

Sur les figures 5 et 6A à6C, on peut voir un autre exemple de réalisation d'une interface I2 selon l'invention comportant un bâti 216, un frein 204, un corps d'épreuve 226 ayant la forme d'une roue et un élément d'interaction avec l'utilisateur 201, l'élément d'interaction avec le fluide n'étant pas visible.

La roue comporte un moyeu 228, un anneau extérieur 232 et des rayons 230 reliant le moyeu 228 à l'anneau extérieur 232.

Dans cet exemple, le moyeu 228 est solidarisé au boîtier de l'interface par exemple par des vis traversant axialement le moyeu 228 et l'anneau extérieur 232 est solidarisé au bâti par exemple par des vis traversant axialement l'anneau extérieur.

Deux capteurs d'effort 240.1, 240.2 sont disposés en appui chacun contre un rayon 230 et disposés par rapport aux rayons de sorte que, lorsque le corps d'épreuve 226 est sollicité dans un sens de rotation, un seul des capteurs est sollicité. Les capteurs d'efforts sont fixés sur le bâti 216 et en appui contre une face d'un rayon 230. En variante, les capteurs d'effort pourraient être assemblés avec une précontrainte de charge, ou, comme cela a été mentionné ci-dessus, être remplacés par des jauges d'élongation disposées sur le corps d'épreuve et détectant la déformation par exemple des rayons sous l'effet du couple de torsion. Plus généralement les capteurs d'effort peuvent être remplacés par des capteurs de déformation.

Le fonctionnement de ce dispositif est similaire à celui du dispositif de la figure 1 décrit ci-dessus.

Des moyens permettant d'appliquer des contraintes mécaniques au corps d'épreuve, comme des moyens de guidage en rotation ou en translation, peuvent avantageusement être ajoutés, ce qui permet de réduire le nombre de capteurs de force en assemblant ce dernier avec une précontrainte de charge.

Les données issues de ces capteurs de force ou de déformation sont traitées par un système électronique afin de déterminer si le couple exercé par l'utilisateur sur l'interface dépasse un seuil prédéterminé. Le signe de couple est également déterminé et permet de connaître le sens dans lequel l'utilisateur a l'intention de déplacer le bouton.

Comme cela a été indiqué ci-dessus, la connaissance de la valeur réelle du couple de torsion n'est pas nécessaire, la connaissance du sens de torsion est suffisante. On peut donc mettre en œuvre des capteurs bas coût permettant de détecter au minimum un seuil binaire ou une fonction monotone de l'effort ou de la déformation, en dehors de toute spécification de type linéarité, dynamique, résolution, etc., dans la mesure où le capteur est suffisamment sensible pour détecter un couple minimum agissant sur l'interface sans qu'il n'y ait mise en rotation de cette dernière. Le capteur est aussi tel qu'il est capable de tenir un effort maximal sans dégradation.

Le moteur M est destiné à déplacer directement l'arbre 2 et donc le bouton à faible couple, sans que cela ne représente un danger pour l'utilisateur. En effet, le moteur n'est pas destiné à appliquer des couples très élevés. Ainsi le moteur peut présenter une petite taille ce qui facilite l'intégration du moteur dans l'interface et de réaliser une interface de taille réduite. En outre, puisque le moteur n'est pas destiné à fonctionner en permanence, la consommation électrique de l'interface est réduite par rapport à une interface haptique utilisant uniquement un moteur électrique.

Par ailleurs, l'interface haptique selon l'invention permet de générer un grand nombre de motifs haptiques. A titre illustratif certains d'entre eux vont être décrits ci-dessous, mais il ne s'agit pas d'une description exhaustive des motifs haptiques réalisables par l'interface selon l'invention.

Comme décrit ci-dessus, l'interface comporte des joints 13 pour assurer l'étanchéité de la chambre contenant le fluide magnéto-rhéologique. Ces joints exercent un frottement sur l'arbre 2, générant un couple à vide préjudiciable au ressenti haptique.

Le moteur peut être avantageusement commandé pour compenser ce couple à vide. Par exemple, il est commandé pour assister le déplacement en rotation du bouton. Le moteur M peut être activé pour compenser le couple à vide lorsqu'aucun champ magnétique n'est appliqué au fluide magnéto-rhéologique. Par exemple, lors de la conception de l'interface, le couple à vide est mesuré ou estimé, et l'unité de commande est programmée pour commander le moteur de sorte qu'il compense ce couple à vide.

De manière très avantageuse, le ressenti haptique peut être sensiblement amélioré en commandant le moteur à partir de la connaissance de l'intention de l'utilisateur. En effet dès que cette intention est détectée, le moteur est activé pour compenser le couple à vide, ainsi l'utilisateur peut ne jamais ressentir ce couple à vide inhérent aux frottements des joints. La connaissance de l'intention d'action de l'utilisateur est également bénéfique dans le cas des modes de fonctionnement mettant en œuvre à la fois le frein magnéto-rhéologique et le moteur, la commande de ces éléments se faisant de manière plus réactive, les transitions sont moins perceptibles par l'utilisateur.

Le moteur peut également être actionné pour générer une vibration, qui se transmet à l'arbre d'actionnement puisque les deux arbres sont liés en rotation, cette vibration donnant par exemple une indication haptique de type alerte.

En outre, il est possible de reproduire l'effet ressort, par exemple la sensation ressentie lorsque l'on manipule un ressort, par exemple un ressort à spirale, sur un axe en rotation. On peut souhaiter reproduire cet effet, par exemple pour ramener le bouton dans une position stable

L'interface est commandée pour exercer, suivant le sens de rotation et la position angulaire, un effort à l'encontre de la rotation du bouton ou une force de rappel sur le bouton.

Un ressort est caractérisé par une raideur k.

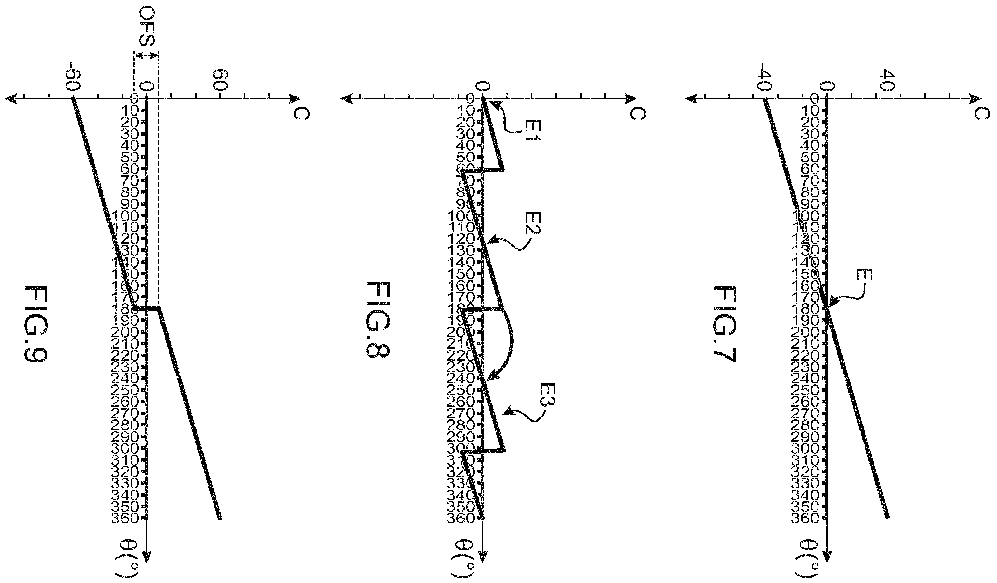

L'unité de commande génère des ordres aux moyens de génération du champ magnétique et au moteur afin d'appliquer au bouton la consigne représentée sur la figure 7, la consigne est une fonction linéaire dont la valeur nulle correspond à une position stable du ressort dont on souhaite simuler l'action sur le bouton, i.e. sa position au repos. La figure 7 représente la variation de la consigne C en fonction de l'angle de rotation θ, qui est ici en degré.

L'angle de 180° correspond à la position stable ou état repos du ressort à simuler

Les ordres générés dépendent de la position angulaire du bouton et du sens de rotation. En effet, plus on s'écarte de la position stable E, plus l'effort s'opposant au déplacement de l'arbre d'actionnement est important. Lorsque le sens de rotation rapproche le bouton de la position stable, un effort de rappel est ressenti par l'utilisateur. Le signe de l'effort à appliquer à l'élément d'interaction avec l'utilisateur dépend du sens de rotation.

Le motif haptique d'un ressort peut être obtenu grâce à différentes commandes.

Selon un premier mode de fonctionnement, le moteur est capable de délivrer un couple suffisant pour simuler l'effet ressort, seul le moteur est alors commandé. Le motif haptique est programmé de sorte que l'angle de 180° soit considéré comme la position E stable ou état repos du ressort. Lorsque le bouton est tourné en éloignement de la position E, le moteur est commandé pour générer un couple résistant à cette rotation. L'intensité de ce couple dépend de l'écart entre la position de « repos » et la position actuelle du bouton. Plus cet écart est important, plus le couple généré par le moteur, sera important, simulant ainsi le rappel élastique. Si l'utilisateur relâche le bouton, le couple exercé par le moteur va tendre à ramener le bouton vers sa position de repos E. Plus ce dernier se rapproche de E et moins le couple exercé par le moteur est important. Au final, le bouton retrouve la position initiale E, la commande du moteur devient nulle et les frottements résiduels du système immobilisent l'interface.

Selon un autre mode de fonctionnement, le frein magnéto-rhéologique est commandé pour générer le couple résistant lorsque le bouton est tourné à partir de sa positon d'équilibre. Le moteur est commandé pour ramener le bouton dans sa position d'équilibre, lorsque l'effort sur le bouton est relâché, ou lorsqu'il est inférieur à la force de rappel du ressort.

Il sera compris que les valeurs d'angle ne sont données qu'à titre d'exemple et ne sont en aucun cas limitatives.

Sur la figure 8, on peut voir un motif haptique destiné à reproduire le comportement d'un bouton type indexeur à trois positions en considérant un mode de fonctionnement utilisant le moteur seul.

Ce bouton fonctionne de la manière suivante. Lorsque l'utilisateur exerce un couple suffisant sur le bouton, celui-ci passe un cran et prend la position d'équilibre suivante.

Les positions d'équilibre sont désignées E1, E2, E3.

Lorsque le bouton s'écarte par exemple de la position d'équilibre E2, i.e. qu'il est pivoté dans le sens horaire ou antihoraire à partir de l'angle de 120° sans cependant pivoter pour atteindre l'angle 180° ou 60° respectivement, , il revient à sa deuxième position d'équilibre E2 sous l'action du moteur M. Par exemple lorsque le bouton atteint la positon de 180, un cran est simulé et le bouton passe à la troisième position d'équilibre E3 grâce à l'action du moteur qui est maintenant commandé avec un couple dépendant de la référence relative à la position E3, et qui entraîne le bouton vers la position d'équilibre E3. Ce passage de la position à 180° à la position à 240° est schématisé par la flèche F.

Il se peut que des instabilités se produisent aux alentours de la ou des positions stables. Par exemple, en fonction du moteur mis en œuvre des mouvements saccadés ou une absence de déplacement peuvent apparaître lorsqu'un petit effort est commandé qui serait de l'ordre de grandeur des frottements internes de l'interface. En prévoyant un saut en effort ou offset OFS (représenté sur la figure 9) suffisant au niveau de la position d'équilibre, le moteur est commandé pour générer un effort supérieur aux frottements internes de l'interface.

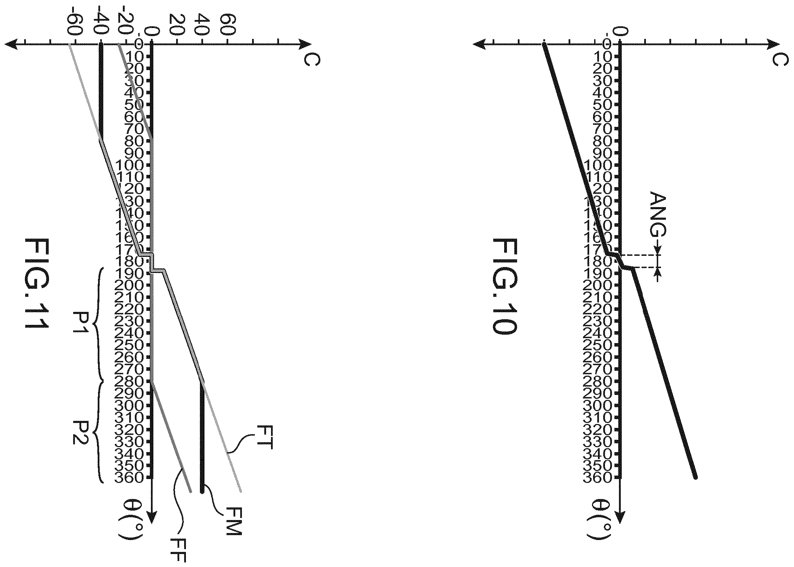

Sur la figure 10, on peut voir la commande d'un autre motif haptique dans lequel est prévue en plus de l'offset OFS une plage angulaire ANG autour de la position d'équilibre E dans laquelle aucun effort n'est généré par le moteur et le frein. La stabilité de l'interface autour de la position d'équilibre est encore améliorée par rapport à celle commandée avec la consigne de la figure 9.

Sur la figure 11, on peut voir la consigne d'un motif haptique qui s'applique au moteur et au frein. Comme cela a été expliqué ci-dessus, le moteur est de préférence adapté à l'application de faibles couples tandis que le frein peut appliquer des couples importants. On peut prévoir alors avantageusement de commander le moteur pour qu'il applique seul sur une première plage angulaire P1 l'effort résistant, sur la plage [180°; 280°] dans l'exemple représenté, puis sur une deuxième plage angulaire P2, le frein est également activé pour appliquer un effort résistant supplémentaire s'ajoutant à celui généré par le moteur.

L'effort appliqué par le moteur est désigné F_{M} et l'effort appliqué par le frein est désigné F_{F} et l'effort total est désigné F_{T}.

La mise en œuvre du moteur et du frein permet de minimiser les transitions brusques et d'augmenter la fluidité de l'interaction haptique. L'interaction haptique est alors améliorée et la transparence de l'interaction est augmentée.

Il sera compris que ce type de consigne ne peut s'appliquer de manière parfaitement symétrique dans la simulation d'un ressort, car le frein ne peut simuler un effort de rappel sur la deuxième plage P2. Malgré la dissymétrie du profil obtenu, puisque c'est l'effort F₁ qui est généré si l'utilisateur déplace le bouton à l'encontre le ressort, et c'est l'effort F_{M} qui est généré si l'utilisateur relâche son action, le ressenti haptique reste suffisant pour être assimilé à un ressort de raideur élevé.

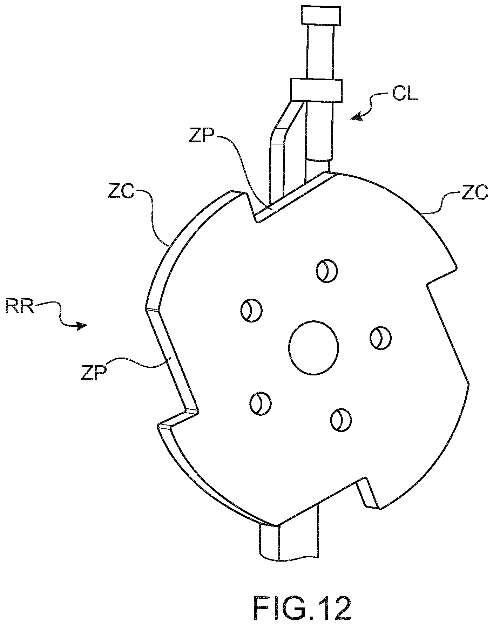

L'interface haptique selon l'invention peut également permettre de reproduire le déplacement d'un cliquet CL le long d'une roue à rochet RR représentée sur la figure 12.

L'extrémité du cliquet CL se déplace sur le contour extérieur de la roue à rochet RR qui comporte une alternance de zones planes ZP et de zones concaves ZC, une zone concave se reliant à une zone plane par un plan radial PR s'étendant suivant un rayon de la roue. Une zone plane ZP se relie à une zone concave ZC par un angle aigue. Lorsque le cliquet se déplace sur le contour de la roue à rochet dans le sens horaire ou la roue se déplace par rapport au cliquet CL dans le sens antihoraire, il glisse par exemple sur une zone concave ZC, pour cela le frein est commandé pour créer des frottements visqueux. Pour reproduire le déplacement du cliquet sur une zone plane ZP, le moteur et/ou le frein sont commandés afin de simuler un effet ressort. Si le cliquet CL se déplace dans le sens antihoraire ou la roue se déplace dans le sens horaire, une butée virtuelle est à simuler lorsque le cliquet entre en contact avec le plan radial. Pour cela le frein et/ou le moteur sont commandés pour générer un effort suffisant pour simuler une butée.

De manière très avantageuse, l'interface haptique selon l'invention peut être utilisée pour simuler un système nécessitant une représentation absolue de la position. En effet, le moteur peut être commandé pour ramener le bouton dans une position voulue. Par exemple, dans le cas d'une interface haptique rotative simulant un contacteur rotatif présentant différents crans et comportant un bouton présentant un repère ou un marqueur visuel. Si l'alimentation de l'interface est interrompue et que l'utilisateur manœuvre l'interface, lors de la reprise de l'alimentation le moteur pourra repositionner le bouton dans sa position avant la coupure de l'alimentation. En l'absence de moteur, l'interface ne peut se repositionner. Il s'ensuivrait alors un décalage entre le repère ou marqueur visuel du bouton perçu par l'utilisateur et la position de l'interface attendue par le modèle haptique.

La commande du système pourrait être réalisée de la manière suivante. La position courante du bouton est stockée de manière régulière dans l'électronique de contrôle. Ceci peut être réalisé par le stockage de cette information dans une mémoire non volatile. En cas de coupure de l'alimentation électrique, le système dispose ainsi d'une mémorisation de la dernière position du bouton. Lors du retour de l'alimentation, l'électronique de contrôle s'initialise puis compare la position courante du bouton avec la dernière position enregistrée dans la mémoire non volatile. Le moteur électrique est alors commandé par exemple à une vitesse constante, jusqu'à ce que la position du bouton soit égale à la position mémorisée. Le moteur est alors être stoppé et l'interface devient opérationnelle. En variante, on peut générer une commande de type « effet ressort » dont la position stable correspond à la dernière position enregistrée dans la mémoire non volatile. Le bouton reprend alors sa dernière position comme si il avait été actionné par un ressort de rappel.

Il sera compris que les exemples de motifs haptiques décrits sont des exemples non limitatifs.

## Revendications

1. Interface haptique comportant :
- un élément d'interaction (1) avec un utilisateur apte à se déplacer dans un premier sens et dans un deuxième sens,
- un élément d'interaction (12) avec un fluide dont la viscosité varie en fonction d'un stimulus extérieur, l'élément d'interaction (12) avec le fluide étant solidaire au moins en translation ou au moins en rotation de l'élément d'interaction (1) avec l'utilisateur,
- des moyens de mesure d'une position angulaire courante (14) de l'élément d'interaction (1) avec l'utilisateur,
- des moyens de détermination du sens de rotation de l'élément d'interaction (1) avec l'utilisateur,
- un frein comportant un fluide dont la viscosité apparente varie en fonction d'un stimulus extérieur et un système de génération (6) dudit stimulus sur commande dans ledit fluide, l'élément d'interaction (12) avec le fluide étant disposé dans le fluide,
- des moyens électromécaniques rotatifs (M) comportant un arbre (M1) solidaire en rotation de l'élément d'interaction (1) avec l'utilisateur,
- une unité de commande (UC) apte à générer des ordres audit système de génération dudit stimulus de modifier la valeur du stimulus, et aux moyens électromécaniques rotatifs (M), l'interface haptique **caractérisée en ce qu'**elle comporte
- des moyens pour détecter le couple exercé par un utilisateur sur l'élément d'interaction (1) avec l'utilisateur, dans le cas d'un élément d'interaction (1) avec l'utilisateur mobile en rotation, afin de connaître le sens du couple et si le couple est supérieur à une valeur donnée pour un sens donné, l'unité de commande commandant le système de génération (6) dudit stimulus sur la base des informations obtenues sur le couple au moins lorsqu'une vitesse nulle de l'élément d'interaction (1) avec l'utilisateur est détectée.

2. Interface haptique selon la revendication 1, dans laquelle les moyens électromécaniques (M) comportent un moteur électrique.

3. Interface haptique selon la revendication 1 ou 2, dans laquelle les moyens de détermination du sens de rotation de l'élément d'interaction avec l'utilisateur sont formés par les moyens pour détecter le couple exercé par un utilisateur sur l'élément d'interaction avec l'utilisateur ou utilisent des variations temporelles des moyens de mesure d'une position angulaire courante (14) de l'élément d'interaction (1) avec l'utilisateur,

4. Interface haptique selon l'une des revendications 1 à 3, dans laquelle l'unité de commande (UC) est configurée pour générer des ordres aux moyens électromécaniques (M) de ramener l'élément d'interaction avec l'utilisateur (1) dans au moins une position donnée.

5. Interface haptique selon l'une des revendications 1 à 4, dans laquelle l'unité de commande (UC) est configurée pour générer des ordres aux moyens électromécaniques (M) et au système de génération dudit stimulus de sorte qu'ils agissent simultanément sur l'élément d'interaction avec l'utilisateur (1).

6. Interface haptique selon l'une des revendications 1 à 5, dans laquelle l'unité de commande (UC) est configurée pour générer des ordres aux moyens électromécaniques (M) afin qu'ils appliquent un couple à l'élément d'interaction avec l'utilisateur (1) compensant des frottements s'appliquant à l'élément d'interaction avec l'utilisateur (1).

7. Interface haptique selon l'une des revendications 1 à 6, dans laquelle l'unité de commande (UC) est configurée pour générer des ordres aux moyens électromécaniques(M) et au système de génération dudit stimulus de sorte que, à partir d'au moins une position angulaire donnée de l'élément d'interaction avec l'utilisateur (1), le système de génération dudit stimulus agisse et/ ou les moyens électromécaniques (M) agissent sur l'élément d'interaction avec l'utilisateur (1), lorsque l'élément d'interaction avec l'utilisateur (1) tourne dans un premier sens et dans un deuxième sens opposé au premier sens, pour s'opposer à la rotation de l'élément d'interaction avec l'utilisateur (1), et de sorte que les moyens électromécaniques (M) assistent la rotation de l'élément d'interaction avec l'utilisateur (1) au moins lorsque celui-ci est pivoté dans le premier sens ou le deuxième sens vers la position angulaire donnée.

8. Interface haptique selon la revendication 7, dans laquelle l'unité de commande (UC) est configurée pour que, lorsque l'élément d'interaction avec l'utilisateur (1) se trouve à la position angulaire donnée, elle génère des ordres aux moyens électromécaniques (M) et/ou au système de génération dudit stimulus d'appliquer un effort non nul sur l'élément d'interaction avec l'utilisateur (1).

9. Interface haptique selon la revendication 7, dans laquelle l'unité de commande (UC) est configurée pour que, lorsque l'élément d'interaction avec l'utilisateur (1) se trouve dans une zone angulaire de part et d'autre de la position angulaire donnée, elle génère des ordres aux moyens électromécaniques (M) et/ou au système de génération dudit stimulus de n'appliquer aucun effort sur l'élément d'interaction avec l'utilisateur (1).

10. Interface haptique selon l'une des revendications 1 à 9, dans laquelle les moyens pour détecter le couple ou la force appliqué par l'utilisateur sur l'élément d'interaction avec l'utilisateur (1) comportent au moins un capteur d'effort (40.1, 40.2, 240.1, 240.2), préférentiellement monté en précontrainte.

11. Interface haptique selon l'une des revendications 1 à 10, dans laquelle les moyens pour détecter le couple comportent au moins un capteur de la déformation provoquée par le couple ou la force à l'un des éléments de l'interface haptique.

12. Interface haptique selon l'une des revendications 1 à 11, comportant un corps d'épreuve (26, 126, 226) qui est disposé de sorte à être déformée par le couple appliqué par l'utilisateur sur l'élément d'interaction (1) avec l'utilisateur, les moyens pour détecter le couple ou la force étant en contact avec ledit corps d'épreuve (26, 126, 226).

13. Interface haptique selon l'une des revendications 1 à 12, dans laquelle le fluide est un fluide magnéto-rhéologique, le stimulus étant un champ magnétique.

14. Procédé de commande d'une interface haptique selon l'une des revendications 1 à 13, comportant les étapes :
- détermination de la vitesse de l'élément d'interaction (1) avec l'utilisateur à partir des informations fournies par les moyens de mesure de la position courante de l'élément d'interaction (1) avec l'utilisateur,
- détermination du couple appliqué à l'élément d'interaction (1) avec l'utilisateur,
- détermination de la position courante de l'élément d'interaction (1) avec l'utilisateur,
- si la vitesse est supérieure à une vitesse donnée, le sens de rotation est celui donné par la vitesse et le système de génération d'un stimulus est commandé de sorte à appliquer le motif haptique enregistré pour la position courante déterminée et pour le sens de rotation déterminé,
- si la vitesse est inférieure à une vitesse donnée et si le couple ou la force est supérieur(e) à une valeur seuil positive ou inférieur(e) à une valeur seuil négative, le sens de déplacement de l'élément d'interaction (1) avec l'utilisateur est déduit du couple ou de la force déterminé(e), et le système de génération d'un stimulus est commandé de sorte à appliquer un stimulus en fonction du motif haptique enregistré pour cette position courante et pour le sens de déplacement déduit.

15. Procédé selon la revendication 14, dans lequel lorsque le couple déterminé est inférieur à une valeur donnée, aucun stimulus n'est appliqué au fluide.

## Patentansprüche

1. Haptische Schnittstelle, die Folgendes umfasst:
- ein Element zur Interaktion (1) mit einem Benutzer, das so ausgebildet ist, dass es sich in eine erste Richtung und in eine zweite Richtung bewegt,
- ein Element zur Interaktion (12) mit einer Flüssigkeit, deren Viskosität in Abhängigkeit von einem externen Stimulus variiert, wobei das Element zur Interaktion (12) mit der Flüssigkeit mindestens translatorisch oder mindestens drehend fest mit dem Element zur Interaktion (1) mit dem Benutzer verbunden ist,
- Mittel zur Messung einer aktuellen Winkelposition (14) des Elements zur Interaktion (1) mit dem Benutzer,
- Mittel zur Bestimmung der Drehrichtung des Elements zur Interaktion (1) mit dem Benutzer,
- eine Bremse, die eine Flüssigkeit, deren scheinbare Viskosität in Abhängigkeit von einem äußeren Stimulus variiert, und ein System zur Erzeugung (6) des Stimulus auf Befehl in der Flüssigkeit umfasst, wobei das Element zur Interaktion (12) mit der Flüssigkeit in der Flüssigkeit angeordnet ist,
- elektromechanische Drehmittel (M), die eine Welle (M1) umfassen, die mit dem Element zur Interaktion (1) mit dem Benutzer drehfest verbunden ist,
- eine Steuereinheit (UC), die so ausgebildet ist, dass sie Befehle für das System zur Erzeugung des Stimulus, um den Stimuluswert zu ändern, und für die elektromechanischen Drehmittel (M) erzeugt, wobei die haptische Schnittstelle **dadurch gekennzeichnet ist, dass** sie Folgendes umfasst
- Mittel zum Erkennen des Drehmoments, das von einem Benutzer auf das Element zur Interaktion (1) mit dem Benutzer ausgeübt wird, im Falle eines Elements zur Interaktion (1) mit dem sich drehenden Benutzer, um die Drehmomentrichtung zu kennen und um zu wissen, ob das Drehmoment für eine bestimmte Richtung größer als ein gegebener Wert ist, wobei die Steuereinheit das System zur Erzeugung (6) des Stimulus basierend auf den über das Drehmoment erhaltenen Informationen zumindest dann steuert, wenn eine Geschwindigkeit von Null des Elements zur Interaktion (1) mit dem Benutzer erkannt wird.

2. Haptische Schnittstelle nach Anspruch 1, wobei die elektromechanischen Mittel (M) einen Elektromotor umfassen.

3. Haptische Schnittstelle nach Anspruch 1 oder 2, wobei die Mittel zur Bestimmung der Drehrichtung des Elements zur Interaktion mit dem Benutzer durch die Mittel zum Erkennen des von einem Benutzer auf das Element zur Interaktion mit dem Benutzer ausgeübten Drehmoments gebildet werden oder zeitliche Variationen der Mittel zur Messung einer aktuellen Winkelposition (14) des Elements zur Interaktion (1) mit dem Benutzer verwenden,

4. Haptische Schnittstelle nach einem der Ansprüche 1 bis 3, wobei die Steuereinheit (UC) so eingerichtet ist, dass sie Befehle an die elektromechanischen Mittel (M) zum Zurückführen des Elements zur Interaktion mit dem Benutzer (1) in mindestens eine gegebene Position erzeugt.

5. Haptische Schnittstelle nach einem der Ansprüche 1 bis 4, wobei die Steuereinheit (UC) so eingerichtet ist, dass sie Befehle an die elektromechanischen Mittel (M) und das System zur Erzeugung des Stimulus erzeugt, so dass sie gleichzeitig auf das Element zur Interaktion mit dem Benutzer (1) wirken.

6. Haptische Schnittstelle nach einem der Ansprüche 1 bis 5, wobei die Steuereinheit (UC) so eingerichtet ist, dass sie Befehle an die elektromechanischen Mittel (M) erzeugt, damit sie ein Drehmoment auf das Element zur Interaktion mit dem Benutzer (1) anwenden und Reibungen kompensieren, die auf das Element zur Interaktion mit dem Benutzer (1) wirken.

7. Haptische Schnittstelle nach einem der Ansprüche 1 bis 6, wobei die Steuereinheit (UC) so eingerichtet ist, dass sie Befehle an die elektromechanischen Mittel (M) und das System zur Erzeugung des Stimulus erzeugt, so dass ab mindestens einer gegebenen Winkelposition des Elements zur Interaktion mit dem Benutzer (1) das System zur Erzeugung des Stimulus auf das Element zur Interaktion mit dem Benutzer (1) wirkt und/oder die elektromechanischen Mittel (M) auf dieses wirken, wenn sich das Element zur Interaktion mit dem Benutzer (1) in eine erste Richtung und in eine zweite Richtung, die der ersten Richtung entgegengesetzt ist, dreht, um der Drehung des Elements zur Interaktion mit dem Benutzer (1) entgegenzuwirken, und so dass die elektromechanischen Mittel (M) die Drehung des Elements zur Interaktion mit dem Benutzer (1) zumindest dann unterstützen, wenn es in die erste Richtung oder in die zweite Richtung in die gegebene Winkelposition geschwenkt wird.

8. Haptische Schnittstelle nach Anspruch 7, wobei die Steuereinheit (UC) so eingerichtet ist, dass sie, wenn sich das Element zur Interaktion mit dem Benutzer (1) in der gegebenen Winkelposition befindet, Befehle an die elektromechanischen Mittel (M) und/oder an das System zur Erzeugung des Stimulus erzeugt, eine nicht nullwertige Kraft auf das Element zur Interaktion mit dem Benutzer (1) anzuwenden.

9. Haptische Schnittstelle nach Anspruch 7, wobei die Steuereinheit (UC) so eingerichtet ist, dass sie, wenn sich das Element zur Interaktion mit dem Benutzer (1) in einem Winkelbereich auf beiden Seiten der gegebenen Winkelposition befindet, Befehle an die elektromechanischen Mittel (M) und/oder das System zur Erzeugung des Stimulus erzeugt, keine Kraft auf das Element zur Interaktion mit dem Benutzer (1) anzuwenden.

10. Haptische Schnittstelle nach einem der Ansprüche 1 bis 9, wobei die Mittel zum Erkennen des vom Benutzer auf das Element zur Interaktion mit dem Benutzer (1) angewandten Drehmoments bzw. der Kraft mindestens einen Kraftsensor (40.1, 40.2, 240.1, 240.2) umfassen, der vorzugsweise vorgespannt montiert ist.

11. Haptische Schnittstelle nach einem der Ansprüche 1 bis 10, wobei die Mittel zum Erkennen des Drehmoments mindestens einen Sensor der durch das Drehmoment oder die Kraft verursachten Verformung eines der Elemente der haptischen Schnittstelle umfassen.

12. Haptische Schnittstelle nach einem der Ansprüche 1 bis 11, die einen Prüfkörper (26, 126, 226) umfasst, der so angeordnet ist, dass er durch das vom Benutzer auf das Element zur Interaktion (1) mit dem Benutzer angewandte Drehmoment verformt wird, wobei die Mittel zum Erkennen des Drehmoments oder der Kraft mit dem Prüfkörper (26, 126, 226) in Kontakt stehen.

13. Haptische Schnittstelle nach einem der Ansprüche 1 bis 12, wobei die Flüssigkeit eine magnetrheologische Flüssigkeit ist, wobei der Stimulus ein Magnetfeld ist.

14. Verfahren zur Steuerung einer haptischen Schnittstelle nach einem der Ansprüche 1 bis 13, umfassend die folgenden Schritte:
- Bestimmen der Geschwindigkeit des Elements zur Interaktion (1) mit dem Benutzer anhand der Informationen, die von den Mitteln zur Messung der aktuellen Position des Elements zur Interaktion (1) mit dem Benutzer bereitgestellt werden,
- Bestimmen des Drehmoments, das auf das Element zur Interaktion (1) mit dem Benutzer angewandt wird,
- Bestimmen der aktuellen Position des Elements zur Interaktion (1) mit dem Benutzer,
- wenn die Geschwindigkeit größer als eine gegebene Geschwindigkeit ist, ist die Drehrichtung die durch die Geschwindigkeit vorgegebene und das System zur Erzeugung eines Stimulus wird so gesteuert, dass es das für die bestimmte aktuelle Position und für die bestimmte Drehrichtung aufgezeichnete haptische Muster anwendet,
- wenn die Geschwindigkeit kleiner als eine gegebene Geschwindigkeit ist und das Drehmoment oder die Kraft größer als ein positiver Schwellenwert oder kleiner als ein negativer Schwellenwert ist, wird die Bewegungsrichtung des Elements zur Interaktion (1) mit dem Benutzer aus dem bestimmten Drehmoment oder der bestimmten Kraft abgeleitet, und das System zur Erzeugung eines Stimulus wird so gesteuert, dass es einen Stimulus in Abhängigkeit von dem aufgezeichneten haptischen Musters für die aktuelle Position und für die abgeleitete Bewegungsrichtung anwendet.

15. Verfahren nach Anspruch 14, wobei, wenn das bestimmte Drehmoment kleiner als ein gegebener Wert ist, kein Stimulus auf die Flüssigkeit angewandt wird.

## Claims

1. Haptic interface comprising:
- an element (1) for interacting with a user and capable of moving in a first direction and in a second direction,
- an element (12) for interacting with a fluid whose viscosity varies according to an external stimulus, the fluid-interaction element (12) being rigidly connected to the user-interaction element (1) at least for translation therewith or at least for rotation therewith,
- means for measuring a current angular position (14) of the user-interaction element (1),
- means for determining the direction of rotation of the user-interaction element (1),
- a brake comprising a fluid whose apparent viscosity varies according to an external stimulus and a system (6) for generating said stimulus on command in said fluid, the fluid-interaction element (12) being disposed in the fluid,
- rotary electromechanical means (M) comprising a shaft (M1) rigidly connected to the user-interaction element (1) for rotation therewith,
- a control unit (UC) capable of generating commands for said system for generating said stimulus to modify the value of the stimulus, and to the rotary electromechanical means (M), the haptic interface being **characterised in that** it comprises
- means for detecting the torque exerted by a user on the user-interaction element (1), in the case of a rotatable user-interaction element (1), in order to determine the direction of the torque and if the torque is greater than a given value for a given direction, the control unit controlling the generation system (6) of said stimulus based on the information obtained on the torque at least when a velocity of the user-interaction element (1) of zero is detected.

2. Haptic interface according to claim 1, wherein the electromechanical means (M) include an electric motor.

3. Haptic interface according to claim 1 or 2, wherein the means for determining the direction of rotation of the user-interaction element are formed by the means for detecting the torque exerted by a user on the user-interaction element or using time variations of the means for measuring a current angular position (14) of the user-interaction element (1),

4. Haptic interface according to one of claims 1 to 3, wherein the control unit (UC) is configured to generate commands for the electromechanical means (M) to bring the user interaction element (1) back to at least one given position.

5. Haptic interface according to one of claims 1 to 4, wherein the control unit (UC) is configured to generate commands for the electromechanical means (M) and for the system for generating said stimulus such that they act simultaneously on the user-interaction element (1).

6. Haptic interface according to one of claims 1 to 5, wherein the control unit (UC) is configured to generate commands for the electromechanical means (M) so that a torque is applied thereby to the user-interaction element (1), which torque offsets friction applied to the user-interaction element (1).

7. Haptic interface according to one of claims 1 to 6, wherein the control unit (UC) is configured to generate commands for the electromechanical means (M) and for the system for generating said stimulus such that, from at least a given angular position of the user interaction element (1), the system for generating said stimulus acts and/or the electromechanical means (M) act on the user-interaction element (1), when the user-interaction element (1) rotates in a first direction and in a second direction opposite to the first direction, to oppose the rotation of the user-interaction element (1), and such that the electromechanical means (M) assist the rotation of the user-interaction element (1) at least when it is pivoted in the first direction or in the second direction towards the given angular position.

8. Haptic interface according to claim 7, wherein the control unit (UC) is configured so that, when the user-interaction element (1) is in the given angular position, it generates commands for the electromechanical means (M) and/or for the system for generating said stimulus to apply a non-zero force to the user-interaction element (1).

9. Haptic interface according to claim 7, wherein the control unit (UC) is configured so that, when the user-interaction element (1) is in an angular zone on either side of the given angular position, it generates commands for the electromechanical means (M) and/or for the system for generating said stimulus to apply no force to the user-interaction element (1).

10. Haptic interface according to one of claims 1 to 9, wherein the means for detecting the torque or force applied by the user to the user-interaction element (1) include at least one force sensor (40.1, 40.2, 240.1, 240.2), preferably mounted pre-stressed.

11. Haptic interface according to one of claims 1 to 10, wherein the means for detecting the torque include at least one sensor sensing the deformation caused by the torque or the force to one of the elements of the haptic interface.

12. Haptic interface according to one of claims 1 to 11, comprising a proof body (26, 126, 226) which is disposed so as to be deformed by the torque applied by the user on the user-interaction element (1), the means for detecting the torque or force being in contact with said proof body (26, 126, 226).

13. Haptic interface according to one of claims 1 to 12, wherein the fluid is a magneto-rheological fluid, the stimulus being a magnetic field.

14. Method for controlling a haptic interface according to one of claims 1 to 13, comprising the steps of:
- determining the velocity of the user-interaction element (1) from the information provided by the means for measuring the current position of the user-interaction element (1),
- determining the torque applied to the user-interaction element (1),
- determining the current position of the user-interaction element (1),
- if the velocity is greater than a given velocity, the direction of rotation is that given by the velocity and the system for generating a stimulus is controlled so as to apply the haptic pattern recorded for the determined current position and for the determined direction of rotation,
- if the velocity is less than a given velocity and if the torque or force is greater than a positive threshold value or less than a negative threshold value, the direction of displacement of the user-interaction element (1) is deduced from the determined torque or force, and the system for generating a stimulus is controlled so as to apply a stimulus according to the haptic pattern recorded for that current position and for the deduced direction of displacement.

15. Method according to claim 14, wherein, when the determined torque is below a given value, no stimulus is applied to the fluid.
